# EUROPÄISCHE PATENTSCHRIFT

(11) **EP 1 757 838 B1**
(45) Veröffentlichungstag und Bekanntmachung des Hinweises auf die Patenterteilung: **15.10.2008**
(21) Anmeldenummer: 05018184.1
(22) Anmeldetag: 22.08.2005
(51) Int. Cl.: F16G 13/20

(54) **Rückensteife Antriebskette**
Stiff back drive chain
Chaîne rigide d'entraînement

(43) Veröffentlichungstag der Anmeldung: 28.02.2007
(73) Patentinhaber: Joh. Winklhofer & Soehne GmbH und Co. KG, 81369 München (DE)
(72) Erfinder: Grabmann, Peter, 86568 Hollenbach (DE)
(74) Vertreter: Grünecker, Kinkeldey, Stockmair & Schwanhäusser Anwaltssozietät

(56) Entgegenhaltungen:
- DE-B- 1 046 422
- DE-C- 244 388
- GB-A- 1 339 018
- JP-A- 62 241 692
- US-A- 3 742 775

## Beschreibung

Die vorliegende Erfindung betrifft eine rückensteife Antriebskette mit einander abwechselnden ersten und zweiten Kettengliedern, die jeweils über ein Kettengelenk miteinander verbunden und um eine Kettengelenkachse zueinander verschwenkbar sind und mit mindestens einer Einrichtung zum zumindest zeitweisen Versteifen oder Arretieren der Kettengelenke nach dem Oberbegriff des Anspruchs 1. Die Erfindung bezieht sich weiter auf einen rückensteifen Kettenantrieb, insbesondere zum Antrieb von automatisierten Tor- oder Türantrieben mit einer rückensteifen Antriebskette und mindestens einem Kettenrad zum Antrieb der rückensteifen Antriebskette.

Eine gattungsgemäße Kette ist beispielsweise bereits in der DE 945 438 B beschrieben. Die dort gezeigte drucksteife Laschenkette wird insbesondere in Windwerken zum Betätigen von Schleusentoren und Schützen eingesetzt und ist dafür mit Versteifungslaschen versehen, die auf den über die Laschen nach außen vorstehenden Bolzen angeordnet sind. Die Versteifungslaschen weisen einen Längsschlitz, durch den die Versteifungslaschen an den vorstehenden Enden zweier aufeinanderfolgenden Bolzen geführt werden, und eine Stirnseitenkontur auf die im versteiften Zustand der Kette keilförmig in die Stirnseite der angrenzenden Versteifungslasche eingreift. Durch den Längsschlitz der Versteifungslaschen lassen sich diese Laschen in Laufrichtung der Kette verschieben, wobei das Verschieben durch das Herumführen der Kette um ein Antriebsritzel bewirkt wird. Das Herumführen der Kette um das Ritzel, bzw. das Auseinanderschieben der Führungslaschen auf dem Antriebsritzel führt zum Versteifen der Kette. Vor und hinter dem Antriebsritzel wird die Kette jeweils zwischen zwei Rollen geführt. Diese druckfeste Laschenkette versteift sich nur, wenn die Versteifungslaschen zu beiden Seiten des Antriebsritzels in die durch den Längsschlitz definierten Endpositionen verschoben sind, wodurch die Versteifungswirkung direkt von der Umschließung des Antriebsritzels durch die Gelenkkette abhängt.

Neben dieser drucksteifen Laschenkette mit in Kettenlängsrichtung verschiebbaren Versteifungslaschen gibt es im Stand der Technik eine Reihe von weiteren unterschiedlichen Konstruktionen zur Versteifung von Ketten. Aus der DE 1 450 699 B1 ist eine Kette mit mehreren parallel zueinander angeordneten, durch einen Gelenkbolzen miteinander verbundenen Kettenlaschenreihen bekannt. Zwischen der Außen- und Innenlasche ist eine Druckübertragungsplatte mit einem seitlich vorstehenden Ansatz vorgesehen, dessen Stirnseiten als Anschlagflächen ausgebildet sind, wodurch sich die Kette in einer Richtung versteift, aber in der anderen Richtung flexibel bleibt. Des weiteren ist aus der DE 735 715 B eine Gelenkkette bekannt, bei der durch eine halbierte Zylinderhülse, die um einen Kettenbolzen angeordnet ist, und entsprechende Aussparungen in den Laschen eine Beschränkung des Verschwenkens der Kettenglieder um die Kettengelenke bewirkt wird. Auch hier wird selbst durch die Verwendung mehrerer verschiedenartiger Laschen und einer zusätzlichen halbierten Hülse nur eine einseitige Versteifung von Funktionen erreicht. Darüber hinaus sind aus der DE 876 627 B die Versteifung von Ketten nach dem Reißverschlussprinzip und aus der DE 212 083 die Verwendung von bogenförmigen Schlitzen in den Außenlaschen und in diese eingreifende Stifte der Innenlaschen bekannt. Eine gattungsgemäße Antriebskette mit einer federvorgespannten Rasteinrichtung zum Versteifen der Kettengelenke ist aus der DE 10 46 422 B1 bekannt.

Des weiteren existiert eine Neuentwicklung einer rückensteifen Kette, die von der Anmelderin in einer früheren, aber nachveröffentlichten Anmeldung beschrieben wurde. Bei dieser Kette sind die Kettenglieder in Kettenlaufrichtung längsbeweglich verschiebbar und die Stirnseiten der Innenlaschen mit Steckkonturen versehen, die im zusammengeschobenen Zustand ineinandergefügt sind. Dabei ist ein Abschnitt der Kontur keilförmig ausgebildet und ermöglicht eine reibschlüssige Verbindung, die auch noch im unbelasteten Zustand die Kettengelenke versteift. Diese rückensteife Kette ermöglicht zwar eine beidseitige Versteifung der Kettengelenke, kann aber im versteiften Zustand keine Zugkräfte übertragen.

Zwar haben sich die bisher im Stand der Technik eingesetzten Konstruktionen zu einem Teil gut bewährt, jedoch sind sie häufig in ihrer Funktion, z.B. durch einseitige Versteifungsfähigkeit und/oder begrenzte Versteifungsbedingung, beschränkt und in ihrer technischen Ausführung aufwendig, so dass weiterhin der Bedarf an einer einfachen und wirkungsvollen rückensteifen Antriebskette besteht.

Es ist daher die Aufgabe der vorliegenden Erfindung, eine rückensteife Antriebskette der eingangs genannten Art bereitzustellen, die eine möglichst uneingeschränkte Versteifung bei einer möglichst einfachen Konstruktion ermöglichen.

Bei einer gattungsgemäßen rückensteifen Antriebskette ist es bekannt eine Einrichtung zum zumindest zeitweisen Versteifen oder Arretieren der Kettengelenke eine federelastisch ver- und/oder entrastbare Rasteinrichtung vorzusehen.

Der Vorteil dieser Konstruktion besteht in dem einfachen Aufbau, einer geringen Anzahl von Bauteilen und der unter Fixierung durch die Rasteinrichtung, wodurch eine im Wesentlichen kraftfreie Versteifung möglich wird. Im verrasteten Zustand ist eine Versteifung oder Arretierung der Kettengelenke zu beiden Schwenkrichtungen des Kettengelenks möglich, wodurch ein sicheres Abstützen der Antriebskette in sich selbst und eine Schubübertragung ohne zusätzliche Führung über die Kettenglieder möglich ist, beispielsweise zum Betätigen automatischer Tor- oder Türantriebe. Da das Versteifen oder Arretieren der Kettengelenke durch eine federelastisch ver- und/oder entrastbare Rasteinrichtung ist bei dieser rückensteifen Antriebskette auch ein schneller Lastwechsel zwischen einer Schub- und Zugbelastung möglich. Solche schnellen Lastwechsel sind beispielsweise bei einem automatischen Antrieb notwendig, um die gesetzlich vorgeschriebene Sicherheitsaspekte zu erfüllen. Ein automatischer Tor- oder Türantrieb muss in der Lage sein, bei einem Auftreffen auf einen Gegenstand, beispielsweise auf eine Person, einen sofortigen Lastwechsel auszuführen, um den eingeklemmten Gegenstand zu entlasten. Die federelastisch ver- und/oder entrastbare Rasteinrichtung hat weiterhin den Vorteil, nur bei der Rastbewegung selbst eine größere Kraft auf die Rasteinrichtung auszuüben und im verrasteten sowie im vollständig geöffneten Zustand im Wesentlichen kraftfrei zu sein.

Erfindungsgemäß wird es vorgesehen, dass die Rasteinrichtung mittels eines Verschwenkens der Kettenglieder relativ zueinander ver- und/oder entrastbar ist. Dies ermöglicht ein sehr einfaches Wirkprinzip der Rasteinrichtung bei dem keine zusätzliche Rastbewegung notwendig ist, außer die Bewegung der Kettenglieder um die Kettengelenkachse. Die Bewegung der Kettenglieder bewirkt ein seitliches im Wesentlichen senkrecht zur Kettenlängsachse ausgerichtetes Verschwenken, das durch die Rasteinrichtung nutzbar ist, die Kettengelenke zu versteifen oder zu arretieren. Darüber hinaus ermöglicht die seitliche Versteifungsbewegung eine Übertragung der Schub- und Zugkräfte, die im wesentlichen über die durch das Kettengelenk miteinander verbundenen Kettenglieder erfolgt und daher unabhängig davon ist, ob die Kettengelenke versteift oder beweglich sind.

Eine vorteilhafte und günstige Ausgestaltung sieht vor, dass die Rasteinrichtung symmetrisch zur Kettenlängsachse in Kettenlaufrichtung ausgebildet sein. Durch die symmetrische Ausgestaltung ist die Rasteinrichtung auf beiden Schwenkrichtungen der Antriebskette um die Kettengelenkachse gleichwirkend, wodurch, die Kette bei einer ebenfalls symmetrischen Ausbildung der Kettenglieder, beidseitig einbaubar ist.

Eine zweckmäßige Ausführungsform sieht vor, dass die Rasteinrichtung einen beim Ver- und/oder Entrasten federelastisch verformbaren Rastvorsprung umfasst. Ein derartig bewegbarer Rastvorsprung ermöglicht ein einfaches Ver- und/oder Entrasten der Rasteinrichtung, bei der in Zusammenwirkung mit einem Gegenlager ein einfaches Versteifen der Kettengelenke möglich wird.

Für eine einfache Ausbildung der Rasteinrichtung kann die Rasteinrichtung einen Rastzapfen und eine Rastvertiefung aufweisen, wobei der Rastzapfen in der Rastvertiefung aufnehmbar ist. In Verbindung mit dem federelastisch verformbaren Rastvorsprung bilden die Rastvertiefung und der Rastzapfen eine wirksame und sichere Rasteinrichtung, bei der der Rastzapfen in der Rastvertiefung aufnehmbar ist und üblicherweise zur Arretierung der Kettengelenke in der eingerasteten Position in der Rastvertiefung verbleibt.

Eine bevorzugte Ausgestaltung der rückensteifen Antriebskette sieht vor, dass jedes der ersten Kettenglieder an jeder Stirnseite in Kettenlaufrichtung eine Rastvertiefung, in die ein Rastzapfen aufnehmbar ist, und mindestens einen Rastvorsprung aufweist, und jedes der zweiten Kettenglieder mindestens einen Rastzapfen aufweist. Die Verbindung der Komponenten der Rasteinrichtung mit den einander abwechselnden Kettengliedern beschränkt die Anzahl der Bauteile der Antriebskette, wobei die Nutzung der Stirnseiten in Kettenlaufrichtung, d.h. in Richtung der Kettenlängsachse, eine Kettenhöhe ermöglicht, die durch die Kettenglieder und ihre eigentliche Kettenfunktion bestimmt ist und nicht durch das Versteifen oder Arretieren der Kettengelenke zur Ausbildung der rückensteifen Antriebskette. Dabei ist die Rastvertiefung bevorzugt als kreisabschnittsförmige Nut ausgebildet, wobei der Kreisabschnittswinkel kleiner als 180°, bevorzugt kleiner als 120°, ist. Der Rastzapfen lässt sich als runder, elliptischer oder kreisabschnittsförmiger Rastbolzen ausgestalten, wobei der Radius des gebogenen Eingriffsabschnitts bzw. eines runden Rastbolzens insbesondere kleiner als der Radius einer als kreisabschnittsförmige Nut ausgebildeten Rastvertiefung ist. Weiter kann ein Teil der Rastvertiefung durch mindestens einen Abschnitt eines oder mehrerer Rastvorsprünge ausgebildet sein. Im Gegensatz zu den im Stand der Technik bekannten rückensteifen Ketten berühren sich in dieser Ausgestaltung die Stirnseiten der ersten Kettenglieder nicht, sondern stützen sich unabhängig voneinander an einem Rastzapfen ab.

In einer anderen Ausführungsform kann jedes der ersten Kettenglieder an einer ersten Stirnseite in Kettenlaufrichtung eine Rastvertiefung und mindestens einen Rastvorsprung aufweisen, und an einer zweiten Stirnseite in Kettenlaufrichtung einen Rastzapfen aufweisen, der in die Rastvertiefung eines benachbarten ersten Kettenglieds passt. Diese Form ermöglicht, dass sich alle Elemente der Rasteinrichtung nur auf dem ersten Kettenglied anordnen lassen. Dadurch können für die zweiten Kettenglieder Standardbauteile verwendet werden, und so die Kosten für die Herstellung der rückensteifen Antriebskette optimiert werden.

Bevorzugt können sich der Rastvorsprung und der Rastzapfen im eingerasteten Zustand übergreifen. Das Übergreifen des Rastvorsprungs gegenüber dem Rastzapfen ermöglicht eine sichere Arretierung der Kettengelenke. Dabei ist der Abstand zwischen dem die Rastbewegung ausführenden, das erste und zweite Kettenglied verbindende Kettengelenk und der vorspringenden Außenkante des Rastvorsprungs größer als zwischen dem Kettengelenk und der dem Kettengelenk zugewandten Außenseite des Rastzapfens im eingerasteten Zustand, d.h. der Abstand gemessen entlang der Kettenlängsachse. Die Summe dieser Abstände ist bevorzugt kleiner als die Kettenteilung, d.h. der Abstand zwischen zwei benachbarten Gelenkbolzen, jedoch größer als die Differenz aus Kettenteilung und der Breite des Rastzapfens in Kettenlaufrichtung. Beim Ver- und/oder Entrasten der Rasteinrichtung muss der Rastzapfen über den elastisch verformbaren Rastvorsprung hin-übergleiten, wobei sich der Rastvorsprung federelastisch verformt, und hinter dem vorstehenden Rastvorsprung in der Rastvertiefung verrasten. Durch das Übergreifen des Rastvorsprungs gegenüber dem Rastzapfen wird eine im wesentliche formschlüssig gehaltene Rasteinrichtung realisiert, die prinzipiell sowohl im verrasteten als auch im entrasteten Zustand belastungsfrei sein kann. Neben einer rein formschlüssigen Verbindung durch das Umgreifen eines bzw. mehrerer Rastvorsprünge um den Rastzapfen kann die vorliegende Rasteinrichtung mit einer ergänzenden reibflüssigen Komponente in seiner verrasteten Position fixiert werden.

Um einen einfachen Aufbau der Kettenrichtung zu ermöglichen, können der Rastvorsprung, die Rastvertiefung und der Rastzapfen Längsachsen aufweisen, die parallel zur Kettengelenksachse angeordnet sind. Eine solche einfache Konstruktion ist die Grundlage für eine einfach wirkende Rasteinrichtung zum Versteifen und/oder Arretieren der Kettengelenke.

Vorteilhafterweise kann das Verschwenken der Kettenglieder zum Ver- und/oder Entrasten der Rasteinrichtung eine bogenförmige Querbewegung zur Kettenlängsachse der Rastvertiefung und des Rastzapfens zueinander bewirken, wobei der Rastzapfen durch die Querbewegung in der Rastvertiefung ver- und/oder entrastbar ist. Im Gegensatz zu einer longitudinalen Rastbewegungen in Richtung der Kettenlängsachse, ermöglicht eine laterale Querbewegung der Rasteinrichtung ein Ver-und/oder Entrasten der Rasteinrichtung ohne eine Längung oder Bewegung der rückensteifen Antriebskette in Richtung der Kettenlängsachse. Dabei erfolgt die seitliche Schwenkbewegung der Rasteinrichtung insbesondere um die Kettengelenkachse, wobei die Tangente der bogenförmigen Querbewegung beim Ver- und/oder Entrasten der Rasteinrichtung im Wesentlichen senkrecht zur Kettenlängsachse steht.

Eine zweckmäßige Ausbildung sieht vor, dass die ersten Kettenglieder als Innenkettenglieder und die zweiten Kettenglieder als Außenkettenglieder ausgebildet sind. Durch eine derart schlichte Ausführung der rückensteifen Antriebskette mit Innenkettengliedern und Außenkettengliedern können herkömmliche, für Standardketten verwendete Vorrichtungen und Maschinen eingesetzt werden, wodurch sowohl die Auslastung dieser Maschinen erhöht als auch auf spezielle Vorrichtungen zur Montage der rückensteifen Antriebskette verzichtet werden kann. Weiter kann das Außenkettenglied zwei Außenlaschen, zwei sich durch die Außenlaschen streckende Gelenkbolzen und mindestens einen Rastzapfen umfassen. Eine solche einfache Ausführung des Außenkettenglieds mit Außenlaschen in Standardform und verpressten Gelenkbolzen ermöglicht den Einsatz von Standardkettenbauteilen, die auch bei anderen Ketten eingesetzt werden, wodurch sich die Kosten der Bauteile reduzieren. Weiter ermöglicht die Einbindung des Rastzapfen im Außenkettenglied dessen Befestigung beim Fügen des Kettenglieds ohne einen zusätzlichen Arbeitsschritt zu erfordern. Von Vorteil ist es weiter, wenn gemäß einer Ausführung der Erfindung der Rastzapfen sich zwischen den Außenlaschen erstreckt und in Richtung der Kettenlängsachse mittig auf den Außenlaschen angeordnet ist. Dies ermöglicht eine Befestigung des Rastzapfens, bevorzugt eines runden Rastbolzens an bzw. in beiden Außenlaschen, wobei der Rastbolzen bevorzugt sowohl mittig in Richtung der Kettenlängsachse als auch über die Breite der Kettenlasche, d.h. zentriert auf der Kettenlasche angeordnet ist.

Günstigerweise kann das Innenkettenglied mindestens eine Innenlasche umfassen, und die Innenlasche eine Rastvertiefung und mindestens einen Rastvorsprung aufweisen. Durch diese besonders einfache Ausgestaltung des Innenkettenglieds wird auch die einfache Anordnung der Elemente der Rasteinrichtung möglich, insbesondere auf den Stirnseiten der Innenlaschen in Kettenlaufrichtung. Entsprechend der oben beschriebenen bevorzugten Ausbildung der Rasteinrichtung sind die Rastvertiefung und der mindestens eine Rastvorsprung senkrecht zur Kettenlängsachse und achsparallel zum Gelenkbolzen angeordnet. Dabei steht die Rasteinrichtung an mindestens einer, bevorzugt an beiden Stirnseiten der Innenlaschen in Kettenlaufrichtung vor, wobei die Flanken zwischen den Längskanten, d.h. den Seiten in Kettenlaufrichtung bzw. parallel zur Kettenlängsachse, im Wesentlichen gerade oder konkav ausgebildet sind. Die konkave Ausbildung der Flanken ermöglicht einen kleinen Biegeradius der Antriebskette. Durch die Verwendung einer einzigen Innenlasche kann eine besonders schmale rückensteife Kette realisiert werden, die in entsprechend engen Einsatzbereichen verwendbar ist.

Dabei kann für eine einfache und preiswerte Produktionen die mindestens eine Innenlasche aus Kunststoff hergestellt sein. Dadurch lässt sich die Innenlasche mit einer Rastvertiefung und mindestens einem Rastvorsprung einstückig ausbilden, wobei zumindest im Bereich der Rasteinrichtung eine federelastische Ausgestaltung durch den Kunststoff selbst oder entsprechende Konstruktionselemente vorgesehen ist. Hierzu ist es für eine entsprechende Dauerelastizität des Materials bzw. der Konstruktionselemente notwendig, um einen sicheren Betrieb bei einer langen Betriebsdauer, entsprechend bei einer hohen Anzahl von Rastwechseln, zu ermöglichen. Darüber hinaus ist auch der Einsatz eines zweiten Kunststoffmaterials zur Ausbildung der Elemente der Rasteinrichtung möglich, wobei die unterschiedlichen Materialien für den Grundkörper der Innenlasche sowie für die Rasteinrichtung in einem Zweikomponenten-Spitzverfahren in eine entsprechende Form eingebracht werden können.

Um eine ausreichende Festigkeit der Innenlasche zu ermöglichen, kann abhängig von dem Kunststoffmaterial die Dicke der Innenlasche der 3- bis 8-fachen, bevorzugt der 4- bis 6-fachen Dicke der Außenlasche entsprechen. Dabei beträgt bei einer Halbzollkettenteilung der rückensteifen Antriebskette die Dicke einer einzelnen Innenlasche ca. 8 mm, entsprechend der ca. 4,5-fachen Dicke der Außenlasche.

Eine Variante sieht vor, dass die Rasteinrichtung mindestens einen Federschlitz umfasst, wobei der Federschlitz in dem ersten Kettenglied ausgebildet ist und mit dem Rastvorsprung zusammenwirkt. Durch einen solchen Federschlitz kann die Federelastizität der Rasteinrichtung entweder erst ermöglicht oder aber verbessert werden. Anstelle eines elastischen Materials, oder zusätzlich zu diesem, ermöglicht ein derartiger Federschlitz die federelastische Formbarkeit des Rastvorsprungs. Dabei ist insbesondere eine Ausgestaltung des Federschlitzes als Längsschlitz in Richtung der Kettenlängsachse für die Bewegbarkeit des Rastvorsprungs von Vorteil, jedoch ist je nach Ausgestalten der Rasteinrichtung auch eine seitliche Anordnung der Federschlitze, insbesondere im Flankenbereich der Innenlasche geeignet, die Federelastizität der Rasteinrichtung herzustellen oder zu verbessern.

Eine vorteilhafte Ausführungsform sieht vor, dass jedes Kettengelenk einen Gelenkbolzen umfasst, der sich durch mindestens eine Gelenköffnung in den Kettengliedern erstreckt, wobei der Gelenkbolzen an mindestens einer Seite der Kettenglieder zum Eingriff in ein Kettenrad vorsteht. Der Gelenkbolzen ermöglicht in Verbindung mit der mindestens einen Gelenköffnung in den Kettengliedern das Verschwenken der Kettenglieder um die Kettengelenkachse. Bei einem flachen Aufbau der Antriebskette kann für einen einfachen Antrieb der rückensteifen Kette die Gelenkbolzen an mindestens einer Seite der Kettenglieder zum Eingriff in ein dazu abgestimmtes Kettenrad vorstehen. Weiter ist es auch möglich, dass der Gelenkbolzen beidseitig über die Kettenglieder übersteht, und in ein darauf abgestimmtes aufwendigeres Kettenrad eingreift, wobei ein solches zweiteiliges Kettenrad eine sichere Führung der Kette zwischen den einzelnen Zahnrädern des Kettenrades ermöglicht. Darüber hinaus kann eine erfindungsgemäße rückensteife Antriebskette auch mit Antriebsmöglichkeiten ohne überstehenden Gelenkbolzen realisiert werden, beispielsweise in Form einer Rollenkette.

Die vorliegende Erfindung bezieht sich weiter auf einen rückensteifen Kettenantrieb, insbesondere zum Antrieb von automatisierten Tor- oder Türantrieben mit einer der vorstehend beschriebenen rückensteifen Antriebsketten und mindestens einem Kettenrad zum Antrieb der rückensteifen Antriebskette. Dieser erfindungsgemäße Kettenantrieb ermöglicht bei automatischen Tor- oder Türantrieben eine Schubübertragung durch die Kette ohne zusätzliche seitliche Führungen. Gleichzeitig ermöglicht die Rasteinrichtung der Kette einen schnellen Wechsel zwischen Schub- und Zugbewegung der Kette, wodurch Sicherheitsanforderungen beim Betrieb von automatisierten Tor- oder Türantrieben ohne zusätzliche Maßnahme erfüllt werden können.

Eine zweckmäßige Ausgestaltung des Kettenantriebs sieht vor, dass eine Führungseinrichtung vorgesehen ist, um zumindest beim Ver- und/oder Entrasten die rückensteife Antriebskette zu führen und abzustützen. Diese Führungseinrichtung bietet der rückensteifen Antriebskette ein Gegenlager für die durch das Kettenrad aufgebrachten Kraft zum Ver- und/oder Entrasten. Dieses Gegenlager überführt die Drehbewegung des Kettenrads in eine Schwenkbewegung des Kettengelenks bzw. in eine Querbewegung der Rasteinrichtung zum Versteifen oder Arretieren der Kettengelenke. Dabei kann die Führungseinrichtung bevorzugt eine Länge der 1-fachen bis 3-fachen, insbesondere ca. der 2-fachen Kettenteilungslänge aufweisen, um die rückensteife Antriebskette ausreichend zu führen und abzustützen. Die Führungseinrichtung kann als Führungsschiene, einseitige Abstützung oder als eine bzw. mehrere nebeneinander angeordnete Rollen ausgebildet sein, wobei eine Abstützung jeweils auf einer oder zu beiden Schwenkrichtungen der Kette vorgesehen sein kann.

Um möglichst kleine Abmessungen des rückensteifen Kettenantriebs zu ermöglichen, kann der Durchmesser des Kettenrads kleiner als der 4-fache, bevorzugt kleiner als der 3-fache, Teilungsabstand der Antriebskette sein. Ein solcher Durchmesser des Kettenrads korreliert mit einem entsprechend großen Biegeradius zwischen den benachbarten Kettengliedern. Bei einer Kettenteilung bzw. einem Gelenkbolzenabstand von ca. 12,7 mm kann der Kettenraddurchmesser ca. 38 mm, bevorzugt sogar bis zu 30 mm betragen. Je nach Ausgestaltung der Rasteinrichtung des ersten Kettenglieds bzw. der Innenlasche und dem Biegeradius müssen die Flanken zwischen den Seitenkanten und der vorspringenden Rasteinrichtung möglicherweise konkav oder mit einer Aussparung ausgebildet sein.

Im Folgenden wird ein Ausführungsbeispiel der vorliegenden Erfindung anhand einer Zeichnung näher erläutert. Es zeigen:
Fig. 1 eine Seitenansicht einer erfindungsgemäßen rückensteifen Kette, die um ein Kettenrad herumgeführt ist;
Fig. 2 eine Draufsicht mit einem bereichsweisen Schnitt durch die erfindungsgemäße rückensteife Kette aus Fig. 1;
Fig. 3a eine Seitenansicht der Innenlasche der rückensteifen Kette aus Fig. 1;
Fig. 3b eine Seitenansicht einer weiteren Ausführungsform einer Innenlasche zur Verwendung mit der rückensteifen Kette aus Fig. 1;
Fig. 3c eine Seitenansicht noch einer Ausführungsform einer Innenlasche zur Verwendung mit der rückensteifen Kette aus Fig. 1;
Fig. 3d eine Seitenansicht einer zusätzlichen Ausführungsform einer Innenlasche zur Verwendung mit einer erfindungsgemäßen rückensteifen Kette.
Fig. 4 Eine weitere Seitenansicht der erfindungsgemäßen rückensteifen Kette aus Fig. 1, herumgewickelt um ein Kettenrad, bei der die Außenlaschen im Bereich des Kettenrads weggeschnitten sind.

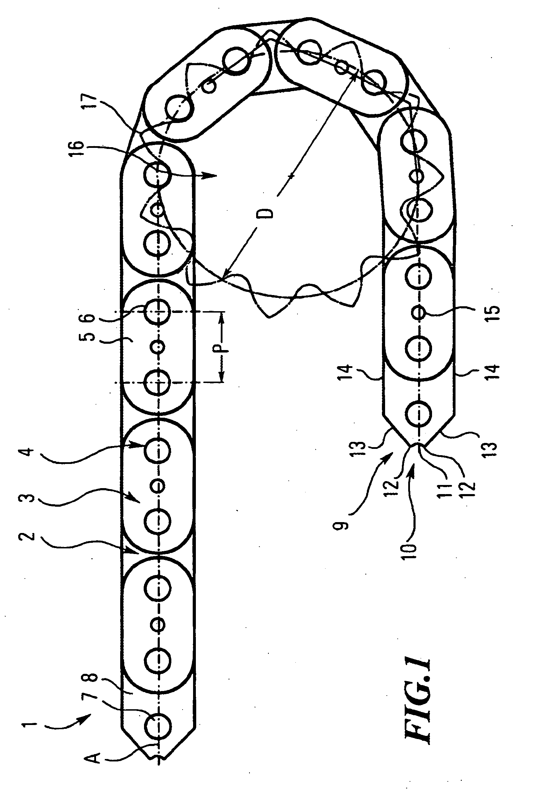

Die in Fig. 1. dargestellte rückensteife Antriebskette 1 umfasst abwechselnd Innenkettenglieder 2 und Außenkettenglieder 3. Die Innenkettenglieder 2 und Außenkettenglieder 3 sind abwechselnd jeweils über ein Kettengelenk 4 schwenkbar miteinander verbunden. Die Außenkettenglieder 3 umfassen zwei im parallelen Abstand zueinander angeordnete Außenlaschen 5, die über einen senkrecht zu diesen angeordneten Gelenkbolzen miteinander verbunden sind. Die Gelenkbolzen 6 erstrecken sich senkrecht zur Kettenlängsachse A durch die Außenkettenlaschen 5 und durch die Gelenköffnung 7 in der Innenlasche 8 des Innenkettenglieds 2.

Die Stirnseite 9 der Innenlasche 8 in Richtung der Kettenlängsachse bzw. der Laufrichtung der rückensteifen Antriebskette 1, ist mit einer Rasteinrichtung 10 versehen, die eine im Wesentlichen mittig auf der Stirnseite 9 angeordnete Rastvertiefung 11 sowie zu beiden Seiten der Rastvertiefung 11 einen Rastvorsprung 12 aufweist. Angrenzend an die Rastvorsprünge 12 schließen sich die Stirnseitenflanken 13 an, die sich von der Rasteinrichtung 10 bis zu den Seitenkanten 14 der Innenlasche 8 erstrecken, wobei die Seitenkanten 14 parallel zur Kettenlängsachse A verlaufen.

Das Außenkettenglied 3 weist neben den Gelenkbolzen 6 einen Rastzapfen 15 auf, der sich durch die beiden Außenlaschen 5 hindurch zwischen den Außenlaschen 5 erstreckt, ohne auf der Außenseite der Außenlaschen 5 vorzustehen. Der Rastzapfen 15 ist ebenfalls Teil der Rasteinrichtung 10 und wirkt mit der Rastvertiefung 11 und den Rastvorsprüngen 12 zusammen um die Kettengelenke 4 zu versteifen oder zu arretieren. Der Mittenabstand zwischen den Gelenkbolzen 6 der sich einander abwechselnden Innenkettenglieder 2 und Außenkettenglieder 3, die Kettenteilung P bleibt über die gesamte Länge der rückensteifen Antriebskette 1 konstant, auch während der Umlenkung der Kette um das Kettenrad 16. Das Kettenrad 16 weist einen Teilkreisdurchmesser D auf, d.h. der Durchmesser des Kettenrads zwischen den mit den Kettenzähnen 17 im Eingriff stehenden Gelenkbolzen 6.

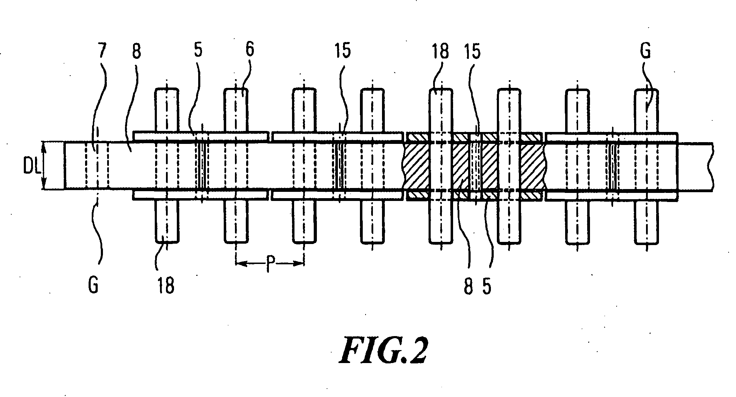

Fig. 2 zeigt eine Draufsicht auf die erfindungsgemäße rückensteife Antriebskette 1, bei der über ein Außenkettenglied 3 ein Schnitt durch die Antriebskette 1 gezeigt ist. Die Gelenkbolzen 6 erstrecken sich durch die Außenlaschen 5 und die Innenlaschen 8 entlang der Kettengelenkachse G durch die Innen- und Außenkettenglieder 2, 3. Die das Innenkettenglied 2 bildende Innenlasche 8 weist eine Dicke DL auf, die ein Vielfaches der Dicke der Außenlaschen 5 ist. Bei dieser Ausführung der rückensteifen Antriebskette 1 stehen die Gelenkbolzen 6 an beiden Seiten der Außenlaschen 5 des Außenkettenglieds 3 über die Außenseite der Außenlaschen 5 über. Der Überstand 18 des Gelenkbolzens 6 dient zum Antrieb der rückensteifen Antriebskette 1 durch ein entsprechend ausgebildetes Kettenrad 16. Dabei entspricht der Abstand der Zähne 17 des Kettenrads 16 im Teilkreisdurchmesser D der Kettenteilung P der Antriebskette 1. Der Rastzapfen 15 erstreckt sich zwischen den beiden Außenlaschen 5, wobei er sich im Wesentlichen durch die Außenlaschen 5 hindurch erstreckt, ohne an deren Außenseite überzustehen. Der Rastzapfen 15 kann im Außenkettenglied beispielsweise durch Einpressen oder Verschweißen fest mit den Außenlaschen 5 verbunden sein.

Neben der in Fig. 2 gezeigten Ausführungsform mit beidseitig über die Außenseite der Außenlaschen 5 überstehenden Gelenkbolzen ist auch eine Ausführungsform einer rückensteifen Antriebskette 1 möglich, bei der der Überstand 18 des Gelenkbolzens 6 sich nur auf einer Seite des Außenkettenglieds 3 über die Außenlaschen 5 erstreckt. Auch bei dieser Ausführungsform greift der Überstand 18 in ein entsprechend ausgebildetes Kettenrad 16 ein, wobei sich zwar die Führung der rückensteifen Kette 1 verschlechtern, aber der Aufwand und dadurch insgesamt auch die Kosten reduziert sind.

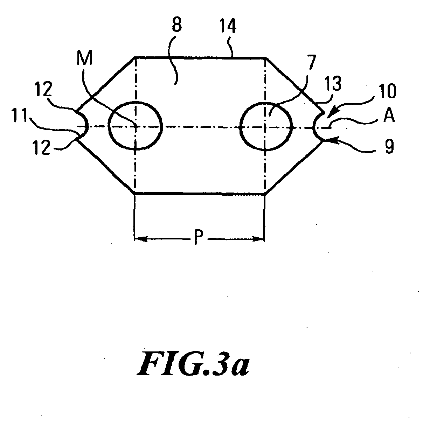

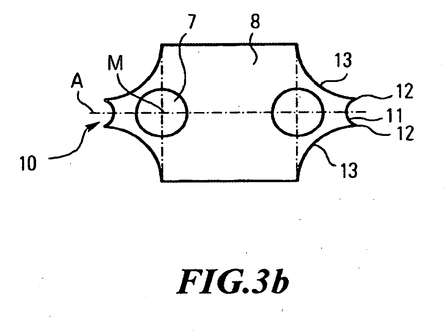

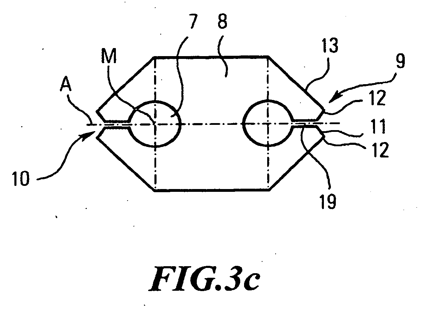

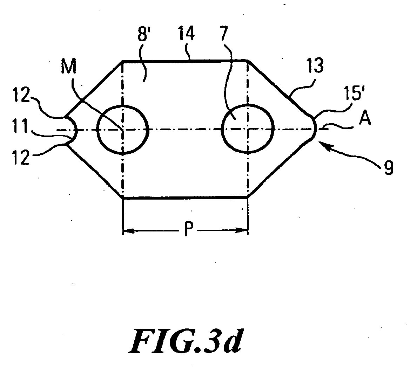

Fig. 3 a zeigt eine vergrößerte Seitenansicht der Innenlasche 8 der rückensteifen Antriebskette 1 aus Fig. 1 und 2. Diese Ansicht zeigt deutlich die beiden in der Innenlasche 8 vorgesehenen Gelenköffnungen 7 zur Aufnahme des Gelenkbolzens 6 mit den Kettenteilungs- oder Pitchabstand P, der dem Abstand der Mittelpunkte M der Gelenköffnungen 7 bzw. der zugehörigen Gelenkbolzen 6 entspricht. Die Seitenkanten 14 der Innenlasche 8 erstrecken sich entlang des Teilungsabstands P, d.h. parallel zu der Mittellinie zwischen den Mittelpunkten M der Gelenköffnungen 7, an der Außenkontur der Innenlasche 8. Seitlich an die Seitenkanten 14 schließen sich die Stirnseitenflanken 13 an, die gegenüber den Seitenkanten 14 sich geneigt in Richtung der Rasteinrichtung 10 an der Stirnseite 9 der Innenlasche 8 erstrecken. Des Weiteren ist hier deutlich die Ausgestaltung der Rasteinrichtung mit der Rastvertiefung 11 zu erkennen, die sich mittig auf der Kettenlängsachse A befindet, wobei die Kettenlängsachse A sich ebenfalls durch die Mittelpunkte M der Gelenköffnungen 7 erstreckt. Die Rastvertiefung 11 ist halbkreisförmig ausgebildet, wobei sich dieser Kreisabschnitt nur über einen Kreisabschnittswinkel von ca. 80° erstreckt. Zwischen der Rastvertiefung 11 und den Stirnseitenflanken 13 sind auf jeder Stirnseite 9 der Innenlasche 8 zwei Rastvorsprünge 12 vorgesehen, die gegenüber einem zentralen Abschnitt der Rastvertiefung 11 vorstehen, wobei die der Rastvertiefung 11 zugewandten inneren Abschnitte der Rastvorsprünge 12 gleichzeitig die äußeren Abschnitte der Rastvertiefung 11 bilden.

Fig. 3 b zeigt eine weitere Ausführungsform einer Innenlasche 8 für die erfindungsgemäße rückensteife Antriebskette 1 aus Fig. 1 und 2. Im Gegensatz zu der in Fig. 3 a gezeigten Innenlasche weist diese Innenlasche 8 konkav ausgebildete Stirnseitenflanken 13 auf. Diese konkav ausgebildeten Stirnseitenflanken 13 ermöglichen eine sehr kurze Umlenkung der Kette 1 und damit ein Kettenrad 16 mit einem kleinen Teilkreisdurchmesser D. Darüber hinaus verändert sich durch die konkave Ausgestaltung der Stirnseitenflanken 13 die Form der Rastvorsprünge 12. Insbesondere im Bereich der Spitzen, die gegenüber der Rastvertiefung 11 vorstehen, reduziert die konkave Ausgestaltung der Flanken 13 die Breite der Rastvorsprünge 12. Bei einer Ausbildung der gesamten Innenlasche 8, bzw. des Bereichs der Rasteinrichtung 10 auf der Innenlasche 8, aus einem elastischen Material kann durch die geringere Breite der Spitzen der Rastvorsprünge 12 ein Material mit einer geringeren Elastizität verwendet werden, um die gleiche federelastische Wirkung der Rasteinrichtung bzw. der Rastvorsprünge zu erreichen, als bei gerade verlaufenden Stirnseitenflanken 13.

Fig. 3 c zeigt eine Innenlasche 8, bei der auf beiden Stirnseiten 9 ein Federschlitz 19 vorgesehen ist, der sich vom tiefsten Punkt der Rastvertiefung 11 zur Gelenköffnung 7 erstreckt und dadurch die Rasteinrichtung 10 an der Stirnseite 9 in zwei Hälften teilt. Der Federschlitz 19 erstreckt sich dabei entlang der Kettenlängsachse A. Neben dieser Konstruktion sind auch andere Anordnungen des Federschlitzes 19 sowohl im Bereich der Rastvertiefung 11 als auch im Bereich der Stirnseitenflanken zur Verbesserung oder zur Herstellung der federelastischen Wirkung der Rasteinrichtung möglich, die sich je nach Anforderung nicht bis zur Gelenköffnung 7 erstrecken müssen.

Entgegen den in den Figuren 3 a bis 3 c gezeigten Innenlaschen 8 ist die Innenlasche 8' der Figur 3 d zur Verwendung mit einer weiteren Ausführungsform einer erfindungsgemäßen rückensteifen Antriebskette 1 vorgesehen. Im Gegensatz zu den bisher beschriebenen Ausführungsformen sind die Stirnseiten 9 der Innenlasche 8' in Richtung der Kettenlängsachse A unterschiedlich ausgestaltet. Dabei weist eine Stirnseite 9, wie bisher, eine Rastvertiefung 11 und zwei angrenzende Rastvorsprünge 12 auf, während die zweite Stirnseite mit einem Rastzapfen 15' versehen ist. Dieser Rastzapfen 15' ist ebenfalls wie die Rastvertiefung 11 mittig auf der Kettenlängsachse A angeordnet. Die Stirnseitenflanken 13 auf der zweiten Stirnseite gehen direkt in den Rastzapfen 15' über. Der Rastzapfen 15' ist halbkreisförmig oder kreisabschnittsförmig ausgebildet, mit einem bevorzugten Kreisabschnittswinkel zwischen 120° und 180°. Der Rastzapfen 15' ist dabei so ausgebildet, dass er in die Rastvertiefung 11 der in der Antriebskette 1 benachbarten Innenlasche 8' hineinpasst, um die Kettengelenke 4 der Kette zu versteifen bzw. zu arretieren. Alle weiteren hier nicht näher beschriebenen Merkmale dieser weiteren Innenlasche 8' sind identisch oder zumindest gleichwirkend mit denen der vorbeschriebenen Laschen 8.

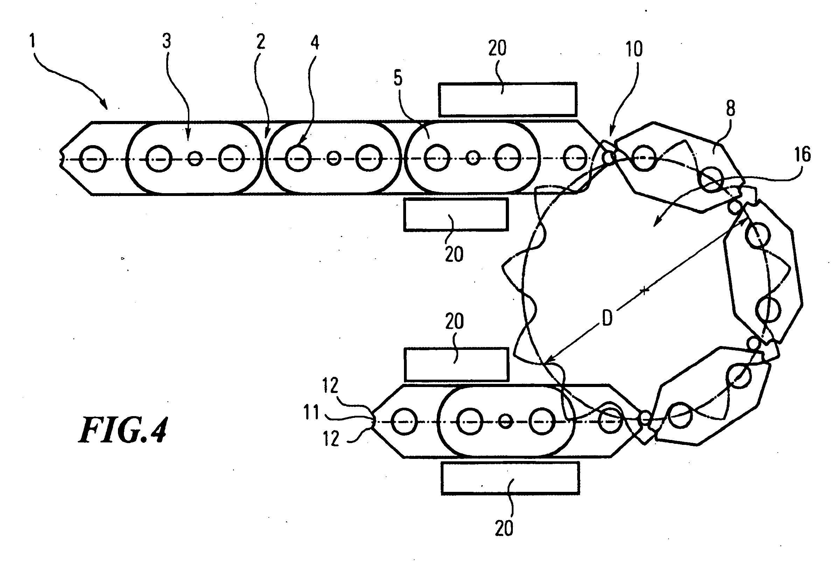

Fig. 4 zeigt wiederum den bereits in Fig. 1 gezeigten Kettenantrieb mit der rückensteifen Antriebskette 1, wobei im Bereich des Kettenrads 16 die Außenlaschen 5 weggeschnitten sind, um das Wirkprinzip der Rasteinrichtung 10 zu verdeutlichen. Im Ein- und Auslaufbereich des Kettenrads 16 sind beidseits der rückensteifen Antriebskette 1 Führungen 20 vorgesehen. Je nach Position der Innen- und Außenkettenglieder 2, 3 und auf dem Kettenrad 16 ist die Rasteinrichtung 10 für das jeweilige Kettengelenk 4 noch verrastet, bereits entrastet, oder befindet sich im Ver- oder Entrastvorgang. Die Führungseinrichtungen führen die Kette 1 sicher zum Eingriff in das Kettenrad 16 und dienen gleichzeitig als Gegenlager um ein sicheres Ver- und Entrasten der Rasteinrichtung 10 zu ermöglichen.

Im Folgenden wird nunmehr, insbesondere anhand der Fig. 4 die Wirkungsweise der rückensteifen Antriebskette bzw. eines rückensteifen Kettenantriebs näher erläutert.

Bei einer erfindungsgemäßen rückensteifen Kette 1 wechseln sich die Innenkettenglieder 2 und Außenkettenglieder 3 einander ab, wobei jedes einzelne Kettengelenk 4 durch eine einzelne Rasteinrichtung 10 ver- und/oder entrastbar ist. Dabei wird jede Rasteinrichtung 10 durch die auf der dem Kettengelenk 4 zugeordneten Stirnseite 9 der Innenlasche 8 vorgesehene Rastvertiefung 11 mit den angrenzenden Rastvorsprüngen 12 sowie den Rastzapfen 15 im Außenkettenglied 3 ausgebildet. Dabei dient der gleiche Rastzapfen 15 auch für die zweite einem Außenkettenglied 3 zugeordnete Rasteinrichtung 10 als Gegenlager für den Rastvorsprung 12 und wird im verrasteten Zustand in der Rastvertiefung 11 der nächsten Innenlasche 8 aufgenommen. Die rückensteife Antriebskette 1 wird im Einlauf- und Auslaufbereich des Kettenrads 16 jeweils durch eine beidseitige Führungseinrichtung geführt und abgestützt, wobei die Führungen 20 beidseits der Antriebskette 1 unterschiedlich lang und an unterschiedlichen Positionen angeordnet sein können.

Beim Eingriff des Kettenrads 16 in die rückensteife Antriebskette 1 wird zunächst die in Kettenlaufrichtung erste Rasteinrichtung 10 der beiden an einen Rastzapfen 15 ausgebildeten Rasteinrichtungen gelöst, indem das Innenkettenglied 2 durch das Kettenrad 16 mitgenommen und um das zugehörige Kettengelenk 4 geschwenkt wird. Das Schwenken des Kettengelenks 4 bewirkt in der Rasteinrichtung 10 eine bogenförmige Querbewegung der Rastvertiefung 11 und der Rastvorsprünge 12 an der Innenlasche 8, wodurch sich die mit dem Rastzapfen 15 überschneidende Rastvorsprünge 12 federelastisch am Rastzapfen 15 vorbeibewegen und die Rasteinrichtung 10 entrastet wird. Sobald sich das Kettenrad 16 weiterdreht, wird auch die zweite Rasteinrichtung 10 an diesem Rastzapfen 15 gelöst, indem das Außenkettenglied 3 um das nächste Kettengelenk 4 schwenkt wird, und der Rastzapfen 15 relativ zur Rastvertiefung 11 und den Rastvorsprüngen 12 eine bogenförmige Querbewegung ausführt und das zugehörige Kettengelenk 4 entrastet. Dabei verhindert die Führungseinrichtung 20 ein Ausweichen der Kettenglieder 2, 3 infolge der senkrecht zur Kettenlängsachse A wirkende Kraft der bogenförmigen Querbewegung. Die an einem Rastzapfen 15 ausgebildeten zwei Rasteinrichtungen 10 mit den angrenzenden Innenlaschen 8 sind unabhängig voneinander ver- und entrastbar, wobei sich die Stirnseiten 9 der angrenzenden Innenlaschen 8 nicht berühren.

Auf der gegenüberliegenden Seite des Kettenrads 16 erfolgt gegebenenfalls ein in der Wirkungsfolge umgekehrtes Verrasten der Kettengelenke 4 zu einer versteiften Antriebskette 1. Durch die Drehung des Kettenrads 16 werden in Verbindung mit der Führungseinrichtung 20 die Rasteinrichtungen 10 der Kettengelenke 4 verrastet, wobei der mit dem Rastzapfen 15 in Eingriff stehende Rastvorsprung 12 sich durch die einwirkenden Querkräfte elastisch verformt und trotz seines Überstands gegenüber dem Rastzapfen an diesem vorbeibewegt, bis sich der Rastzapfen 15 in der Rastvertiefung 11 befindet.

Im verrasteten Zustand ist die rückensteife Kette 1 zu beiden Schwenkbereichen des Kettengelenks 4 rückensteif. Außerdem ist sowohl eine Schubübertragung als auch eine Übertragung von Zugkräften möglich. Im eingerasteten Zustand ist die Rasteinrichtung 10 im Wesentlichen kraftfrei, da der Rastzapfen 15 hauptsächlich durch die Überschneidung mit dem Rastvorsprung 12 formschlüssig in seiner Position gehalten wird. Sowohl Schubkräfte als auch Zugkräfte werden daher hauptsächlich über die Kettengelenke 4 übertragen. Dabei sind bei einer üblichen Halbzoll-Kette, d.h. einer rückensteifen Antriebskette 1 mit einem Teilungsabstand P von ca. 12, 7 mm, Zugbelastungen von 500 N möglich. Auch im vollständig entrasteten Zustand ist die Rasteinrichtung 10 kraftfrei, da sich der Rastzapfen 15 außerhalb der Rastvorsprungs 12 im Bereich der Stirnseitenflanken 13 befindet, ohne diese zu berühren bzw. eine Kraft zu übertragen.

Die federelastisch ver- und/oder entrastbare Rasteinrichtung wird in den beschriebenen Ausführungsformen durch die Elastizität und/oder die Bewegungsfähigkeit der Rastvorsprünge 12, bzw. des mit dem Rastzapfen 15 zusammenwirkenden Rastvorsprungs 12, getragen. Eine Elastizität des Rastvorsprungs 12 ist durch eine geeignete Materialauswahl des Innenkettenglieds 2 bzw. der Innenlasche 8 möglich, wobei insbesondere Kunststoffe in Frage kommen. Neben der Ausgestaltung der Innenlasche 8 aus einem einzigen Kunststoff mit einer geeigneten Elastizität kann auch in einem Zwei-Komponenten-Spitzverfahren nur der Bereich der Rasteinrichtung 10 bzw. des mit dem Rastzapfen 15 in Beziehung stehenden Rastvorsprungs 12 aus einem entsprechend elastischen Kunststoff ausgebildet sein, während der größte Teil der Innenlasche 8, insbesondere auch der Bereich der durch die Zug- und Schubkräfte belasteten Gelenköffnungen 7, aus einem entsprechend steifen Material bestehen kann.

Ergänzend zu oder anstatt einer durch Materialauswahl realisierten Elastizität kann das federelastische Ver- und/oder Entrasten auch mittels eines Federschlitzes 19 erreicht werden, durch den der Rastvorsprung 12 relativ vom Rest der Innenlasche 8 bewegbar ist, um eine relative Bewegung der gegenüber dem Rastzapfen 15 vorstehenden Rastvorsprünge 12 an dem Rastzapfen 15 vorbei zu realisieren. Dabei ermöglicht zwar ein Federschlitz 19, der sich von der Rastvertiefung 11 bis zur Gelenköffnung 7 der Innenlasche 8 erstreckt, zunächst die größte Beweglichkeit des Rastvorsprungs 12, jedoch schwächt diese Konstruktion die Gelenköffnung 7, so dass insbesondere beim Auftreten von Zugkräften eine ungewollte Aufweitung des Federschlitzes 19 und damit eine Schwächung der Antriebskette 1 selbst möglich ist.

Neben der oben beschriebenen Variante, bei der jedes Kettengelenk 4 durch eine eigene Rasteinrichtung 10 versteift oder arretiert werden kann, wird bei einer erfindungsgemäßen rückensteifen Antriebskette 1 mit den in Fig. 3 d gezeigten Innenlaschen 8' immer zwei, einem Außenkettenglied 3 zugeordnete Kettengelenke 4 durch eine Rasteinrichtung 10 versteift. Im Gegensatz zu den bisher beschriebenen Ausführungsformen kann bei einer derartigen rückensteifen Antriebskette 1 auf einen Rastzapfen 15, der sich zwischen den Außenlaschen 5 des Außenkettenglieds 3 erstreckt, verzichtet werden. Vielmehr ist hier eine Stirnseite 9 der Innenlasche 8 mit einer Rastvertiefung 11 und zwei Rastvorsprüngen 12 versehen und die zweite Stirnseite mit einem fest an der Innenlasche angeordneten Rastzapfen 15'. Der an der Innenlasche 8 angeordnete Rastzapfen 15 wirkt in entsprechender Weise mit den Rastvorsprüngen 12 und der Rastvertiefung 11 des nachfolgenden Innenkettenglieds 2 zusammen und arretiert im verrasteten Zustand beide angrenzenden Kettengelenke 4.

## Patentansprüche

1. Rückensteife Antriebskette (1) mit einander abwechselnden ersten und zweiten Kettengliedern, die jeweils über ein Kettengelenk (4) miteinander verbunden und um eine Kettengelenkachse (G) zueinander verschwenkbar sind, und mit mindestens einer Einrichtung zum zumindest zeitweisen Versteifen oder Arretieren der Kettengelenke (4), wobei die Einrichtung eine federelastisch ver- und/oder entrastbare Rasteinrichtung (10) umfasst,
**dadurch gekennzeichnet, dass** die Rasteinrichtung (10) mittels eines Verschwenkens der Kettenglieder relativ zueinander ver- und/oder entrastbar ist.

2. Rückensteife Antriebskette (1) nach Anspruch 1,
**dadurch gekennzeichnet, dass** die Rasteinrichtung (10) symmetrisch zur Kettenlängsachse (A) in Kettenlaufrichtung ausgebildet ist.

3. Rückensteife Antriebskette (1) nach einem der Ansprüche 1 bis 2,
**dadurch gekennzeichnet, dass** die Rasteinrichtung (10) einen beim Ver- und/oder Entrasten federelastisch verformbaren Rastvorsprung (12) umfasst.

4. Rückensteife Antriebskette (1) nach Anspruch 3,
**dadurch gekennzeichnet, dass** die Rasteinrichtung (10) einen Rastzapfen (15) und eine Rastvertiefung (11) aufweist, wobei der Rastzapfen (15) in der Rastvertiefung (11) aufnehmbar ist.

5. Rückensteife Antriebskette (1) nach Anspruch 4,
**dadurch gekennzeichnet, dass** jedes der ersten Kettenglieder an jeder Stirnseite (9) in Kettenlaufrichtung eine Rastvertiefung (11), in die ein Rastzapfen (15) aufnehmbar ist, und mindestens einen Rastvorsprung (12) aufweist und jedes der zweiten Kettenglieder mindestens einen Rastzapfen (15) aufweist.

6. Rückensteife Antriebskette (1) nach Anspruch 4,
**dadurch gekennzeichnet, dass** jedes der ersten Kettenglieder an einer ersten Stirnseite (9) in Kettenlaufrichtung eine Rastvertiefung (11) und mindestens einen Rastvorsprung (12) aufweist und an einer zweiten Stirnseite in Kettenlaufrichtung einen Rastzapfen (15) aufweist, der in die Rastvertiefung (11) eines benachbarten ersten Kettenglieds passt.

7. Rückensteife Antriebskette (1) nach einem der Ansprüche 4 bis 6,
**dadurch gekennzeichnet, dass** sich der Rastvorsprung (12) und der Rastzapfen (15) im eingerasteten Zustand übergreifen.

8. Rückensteife Antriebskette (1) nach einem der Ansprüche 4 bis 7,
**dadurch gekennzeichnet, dass** der Rastvorsprung (12), die Rastvertiefung (11) und der Rastzapfen (15) Längsachsen aufweisen, die parallel zur Kettengelenkachse (G) angeordnet sind.

9. Rückensteife Antriebskette (1) nach einem der Ansprüche 4 bis 8,
**dadurch gekennzeichnet, dass** das Verschwenken der Kettenglieder zum Ver- und/oder Entrasten der Rasteinrichtung (10) eine bogenförmige Querbewegung zur Kettenlängsachse (A) der Rastvertiefung (11) und des Rastzapfens (15) zueinander bewirkt, wobei der Rastzapfen (15) durch die Querbewegung in der Rastvertiefung (11) ver- und/oder entrastbar ist.

10. Rückensteife Antriebskette (1) nach einem der Ansprüche 1 bis 9,
**dadurch gekennzeichnet, dass** die ersten Kettenglieder als Innenkettenglieder (2) und die zweiten Kettenglieder als Außenkettenglieder (3) ausgebildet sind.

11. Rückensteife Antriebskette (1) nach Anspruch 10,
**dadurch gekennzeichnet, dass** das Außenkettenglied (3) zwei Außenlaschen (5), zwei sich durch die Außenlaschen (5) erstreckende Gelenkbolzen (6) und mindestens einen Rastzapfen (15) umfasst.

12. Rückensteife Antriebskette (1) nach Anspruch 11,
**dadurch gekennzeichnet, dass** der Rastzapfen (15) sich zwischen den Außenlaschen (5) erstreckt und in Richtung der Kettenlängsachse (A) mittig auf den Außenlaschen (5) angeordnet ist.

13. Rückensteife Antriebskette (1) nach einem der Ansprüche 10 bis 12,
**dadurch gekennzeichnet, dass** das Innenkettenglied (2) mindestens eine Innenlasche (8) umfasst und die Innenlasche (8) eine Rastvertiefung (11) und mindestens einen Rastvorsprung (12) aufweist.

14. Rückensteife Antriebskette (1) nach Anspruch 13,
**dadurch gekennzeichnet, dass** die mindestens eine Innenlasche (8) aus Kunststoff hergestellt ist.

15. Rückensteife Antriebskette (1) nach Anspruch 13 oder 14,
**dadurch gekennzeichnet, dass** die Dicke (DL) der Innenlasche (8) der 3- bis 8-fachen, bevorzugt der 4- bis 6-fachen Dicke der Außenlasche (5) entspricht.

16. Rückensteife Antriebskette (1) nach einem der Ansprüche 4 bis 15,
**dadurch gekennzeichnet, dass** die Rasteinrichtung (10) mindestens einen Federschlitz (19) umfasst, wobei der Federschlitz (19) in dem ersten Kettenglied ausgebildet ist und mit dem Rastvorsprung (12) zusammenwirkt.

17. Rückensteife Antriebskette (1) nach einem der Ansprüche 1 bis 16,
**dadurch gekennzeichnet, dass** jedes Kettengelenk (4) einen Gelenkbolzen (6) umfasst, der sich durch mindestens eine Gelenköffnung (7) in den Kettengliedern erstreckt, wobei der Gelenkbolzen (6) an mindestens einer Seite der Kettenglieder zum Eingriff in ein Kettenrad (16) vorsteht.

18. Rückensteifer Kettenantrieb insbesondere zum Antrieb von automatisierten Tor- oder Türantrieben mit einer rückensteifen Antriebskette (1) nach einem der Ansprüche 1 bis 17 und mindestens einem Kettenrad (16) zum Antrieb der rückensteifen Antriebskette (1).

19. Rückensteifer Kettenantrieb nach Anspruch 18,
**dadurch gekennzeichnet, dass** eine Führungseinrichtung (20) vorgesehen ist, um zumindest beim Ver- und/oder Entrasten die rückensteife Antriebskette (1) zu führen und abzustützen.

20. Rückensteifer Kettenantrieb nach Anspruch 19,
**dadurch gekennzeichnet, dass** die Führungseinrichtung (20) eine Länge der 1-fachen bis 3-fachen, insbesondere ca. der 2-fachen Kettenteilungslänge (P) aufweist.

21. Rückensteifer Kettenantrieb nach einem der Ansprüche 18 bis 20,
**dadurch gekennzeichnet, dass** der Durchmesser (D) des Kettenrads (16) kleiner als der 4-fache, bevorzugt kleiner als der 3-fache, Teilungsabstand (P) der rückensteifen Antriebskette (1) ist.

## Claims

1. An anti back bend driving chain (1) comprising alternating first and second chain links interconnected via a respective chain hinge (4) and pivotable relative to one another about a chain hinge axis (G), and further comprising at least one means for stiffening or arresting the chain hinges (4) at least temporarily, said means comprising a resiliently lockable and/or unlockable locking means (10),
**characterized in that** the locking means (10) is adapted to be locked in and/or unlocked by pivoting the chain links relative to one another.

2. An anti back bend driving chain (1) according to claim 1,
**characterized in that** the locking means (10) is implemented symmetrically with respect to the longitudinal axis (A) of the chain in the direction of movement of the chain.

3. An anti back bend driving chain (1) according to one of the claims 1 to 2,
**characterized in that** the locking means (10) comprises a locking projection (12) which is resiliently deformable during locking and/or unlocking.

4. An anti back bend driving chain (1) according to claim 3,
**characterized in that** the locking means (10) comprises a locking pin (15) and a locking recess (11), said locking pin (15) being adapted to be received in said locking recess (11).

5. An anti back bend driving chain (1) according to claim 4,
**characterized in that** each of said first chain links is provided with a locking recess (11) on either end face (9) in the direction of movement of the chain, said locking recess (11) being adapted to receive therein a locking pin (15), and with at least one locking projection (12), and that each of the second chain links is provided with at least one locking pin (15).

6. An anti back bend driving chain (1) according to claim 4,
**characterized in that** each of the first chain links is provided with a locking recess (11) and at least one locking projection (12) on a first end face (9) in the direction of movement of the chain and with a locking pin (15) on a second end face in the direction of movement of the chain, said locking pin (15) fitting into the locking recess (11) of an adjacent first chain link.

7. An anti back bend driving chain (1) according to one of the claims 4 to 6,
**characterized in that** the locking projection (12) and the locking pin (15) overlap in the locked condition.

8. An anti back bend driving chain (1) according to one of the claims 4 to 7,
**characterized in that** the locking projection (12), the locking recess (11) and the locking pin (15) have longitudinal axes which extend parallel to the chain hinge axis (G).

9. An anti back bend driving chain (1) according to one of the claims 4 to 8,
**characterized in that** the pivoting of the chain links for locking and/or unlocking the locking means (10) causes the locking recess (11) and the locking pin (15) to move relative to one another in a curved transverse movement relative to the longitudinal axis (A) of the chain, the locking pin (15) being adapted to be locked in and/or unlocked from the locking recess (11) due to said transverse movement.

10. An anti back bend driving chain (1) according to one of the claims 1 to 9,
**characterized in that** the first chain links are implemented as inner chain links (2) and that the second chain links are implemented as outer chain links (3).

11. An anti back bend driving chain (1) according to claim 10,
**characterized in that** the outer chain link (3) comprises two outer link plates (5), two hinge pins (6) which extend through said outer link plates (5), and at least one locking pin (15).

12. An anti back bend driving chain (1) according to claim 11,
**characterized in that** the locking pin (15) extends between the outer link plates (5) and that, when seen in the direction of the longitudinal axis (A) of the chain, it is arranged centrally on said outer link plates (5).

13. An anti back bend driving chain (1) according to one of the claims 10 to 12,
**characterized in that** the inner chain link (2) comprises at least one inner link plate (8) and that the inner link plate (8) is provided with a locking recess (11) and with at least one locking projection (12).

14. An anti back bend driving chain (1) according to claim 13,
**characterized in that** the at least one inner link plate (8) is produced from plastic material.

15. An anti back bend driving chain (1) according to claim 13 or 14,
**characterized in that** the thickness (DL) of the inner link plate (8) corresponds to 3 to 8 times the thickness of the outer link plate (5), preferably to 4 to 6 times the thickness of said outer link plate (5).

16. An anti back bend driving chain (1) according to one of the claims 4 to 15,
**characterized in that** the locking means (10) comprises at least one spring slot (19), said spring slot (19) being formed in the first chain link and cooperating with the locking projection (12).

17. An anti back bend driving chain (1) according to one of the claims 1 to 16,
**characterized in that** each chain link (4) comprises a hinge pin (6) which extends through at least one hinge opening (7) in the chain links, the hinge pin (6) projecting on at least one side of the chain links for engagement with a chain wheel (16).

18. An anti back bend chain drive, in particular for driving automated gate or door drives, comprising an anti back bend driving chain (1) according to one of the claims 1 to 17 and at least one chain wheel (16) for driving said anti back bend driving chain (1).

19. An anti back bend chain drive according to claim 18,
**characterized in that** a guide means (20) is provided for guiding and supporting the anti back bend driving chain (1) at least during the locking in and/or unlocking process.

20. An anti back bend chain drive according to claim 19,
**characterized in that** the guide means (20) has a length which corresponds to 1 to 3 times, in particular to approximately 2 times the chain pitch length (P).

21. An anti back bend chain drive according to one of the claims 18 to 20,
**characterized in that** the diameter (D) of the chain wheel (16) is smaller than 4 times, preferably smaller than 3 times the chain pitch (P) of the anti back bend driving chain (1).

## Revendications

1. Chaîne d'entraînement rigide (1) avec des premiers et des seconds maillons de chaîne alternant les uns aux autres qui sont reliés entre eux chaque fois par une articulation de chaîne (4) et peuvent pivoter les uns par rapport aux autres autour d'un axe (G) d'articulation de chaîne, et avec au moins un dispositif pour rigidifier ou bloquer au moins par moments les articulations de chaîne (4), le dispositif comprenant un dispositif d'encliquetage (10), présentant l'élasticité d'un ressort, pouvant être accroché et/ou décroché,
**caractérisée en ce que** le dispositif d'encliquetage (10) peut être accroché et/ou décroché au moyen d'un pivotement des maillons de chaîne les uns par rapport aux autres.

2. Chaîne d'entraînement rigide (1) selon la revendication 1,
**caractérisée en ce que** le dispositif d'encliquetage (10) est réalisé symétrique par rapport à l'axe longitudinal (A) de la chaîne dans le sens de défilement de la chaîne.

3. Chaîne d'entraînement rigide (1) selon l'une quelconque des revendications 1 ou 2,
**caractérisée en ce que** le dispositif d'encliquetage (10) comprend une saillie d'encliquetage (12) déformable élastiquement lors de l'accrochage et/ou du décrochage.

4. Chaîne d'entraînement rigide (1) selon la revendication 3,
**caractérisée en ce que** le dispositif d'encliquetage (10) comporte un tenon d'encliquetage (15) et un creux d'encliquetage (11), le tenon d'encliquetage (15) pouvant être reçu dans le creux d'encliquetage (11).

5. Chaîne d'entraînement rigide (1) selon la revendication 1,
**caractérisée en ce que** chacun des premiers maillons de chaîne comporte, sur chaque côté frontal (9) dans le sens de défilement de la chaîne, un creux d'encliquetage (11), dans lequel peut être reçu un tenon d'encliquetage (15), et au moins une saillie d'encliquetage (12), et chacun des seconds maillons de chaîne comporte au moins un tenon d'encliquetage (15).

6. Chaîne d'entraînement rigide (1) selon la revendication 4,
**caractérisée en ce que** chacun des premiers maillons de chaîne comporte, sur un premier côté frontal (9) dans le sens de défilement de la chaîne, un creux d'encliquetage (11) et au moins une saillie d'encliquetage (12), et sur un second côté frontal dans le sens de défilement de la chaîne, un tenon d'encliquetage (15) qui s'ajuste dans le creux d'encliquetage (11) d'un premier maillon de chaîne voisin.

7. Chaîne d'entraînement rigide (1) selon l'une quelconque des revendications 4 à 6,
**caractérisée en ce que** la saillie d'encliquetage (12) et le tenon d'encliquetage (15) passent l'une sur l'autre à l'état accroché.

8. Chaîne d'entraînement rigide (1) selon l'une quelconque des revendications 4 à 7,
**caractérisée en ce que** la saillie d'encliquetage (12), le creux d'encliquetage (11) et le tenon d'encliquetage (15) présentent des axes longitudinaux qui sont disposés parallèlement à l'axe (G) d'articulation de chaîne.

9. Chaîne d'entraînement rigide (1) selon l'une quelconque des revendications 4 à 8,
**caractérisée en ce que** le pivotement des maillons de chaîne pour l'accrochage et/ou le décrochage du dispositif d'encliquetage (10), provoque un mouvement transversal en arc par rapport à l'axe longitudinal de chaîne (A) du creux d'encliquetage (11) et du tenon d'encliquetage (15) l'un par rapport à l'autre, le tenon d'encliquetage (15) pouvant être accroché dans le creux d'encliquetage (11) et/ou décroché de celui-ci par le mouvement transversal.

10. Chaîne d'entraînement rigide (1) selon l'une quelconque des revendications 1 à 9,
**caractérisée en ce que** les premiers maillons de chaîne sont réalisés sous la forme de maillons de chaîne intérieurs (2) et les seconds maillons de chaîne sous la forme de maillons de chaîne extérieurs (3).

11. Chaîne d'entraînement rigide (1) selon la revendication 10,
**caractérisée en ce que** le maillon de chaîne extérieur (3) comprend deux éclisses extérieures (5), deux axes d'articulation (6) s'étendant à travers les éclisses extérieures et au moins un tenon d'encliquetage (15).

12. Chaîne d'entraînement rigide (1) selon la revendication 11,
**caractérisée en ce que** le tenon d'encliquetage (15) s'étend entre les éclisses extérieures (5) et est disposé dans la direction de l'axe longitudinal de chaîne (A) au milieu, sur les éclisses extérieures (5).

13. Chaîne d'entraînement rigide (1) selon l'une quelconque des revendications 10 à 12,
**caractérisée en ce que** le maillon de chaîne intérieur (2) comprend au moins une éclisse intérieure (8) et l'éclisse intérieure (8) comporte un creux d'encliquetage (11) et au moins une saillie d'encliquetage (12).

14. Chaîne d'entraînement rigide (1) selon la revendication 13,
**caractérisée en ce que** la au moins une éclisse intérieure (8) est fabriquée en matière plastique.

15. Chaîne d'entraînement rigide (1) selon la revendication 13 ou 14,
**caractérisée en ce que** l'épaisseur (DL) de l'éclisse intérieure (8) correspond à 3 à 8 fois, de préférence à 4 à 6 fois l'épaisseur de l'éclisse extérieure (5).

16. Chaîne d'entraînement rigide (1) selon l'une quelconque des revendications 4 à 15,
**caractérisée en ce que** le dispositif d'encliquetage (10) comprend au moins une fente élastique (19), la fente élastique (19) étant réalisée dans le premier maillon de chaîne et coopérant avec la saillie d'encliquetage (12).

17. Chaîne d'entraînement rigide (1) selon l'une quelconque des revendications 1 à 16,
**caractérisée en ce que** chaque articulation de chaîne (4) comprend un axe d'articulation (6) qui s'étend à travers au moins une ouverture d'articulation (7) des maillons de chaîne, l'axe d'articulation (6) dépassant sur au moins un côté des maillons de chaîne, pour l'engagement dans une roue de chaîne (16).

18. Entraînement à chaîne rigide en particulier pour l'entraînement de portails ou portes automatisés avec une chaîne d'entraînement rigide (1) selon l'une quelconque des revendications 1 à 17 et avec au moins une roue de chaîne (16) pour l'entraînement de la chaîne d'entraînement rigide (1).

19. Entraînement à chaîne rigide selon la revendication 18,
**caractérisé en ce qu'**il est prévu un dispositif de guidage (20) pour guider et soutenir au moins la chaîne d'entraînement rigide (1) lors de l'accrochage et/ou du décrochage.

20. Entraînement à chaîne rigide selon la revendication 19,
**caractérisé en ce que** le dispositif de guidage (20) présente une longueur égale à 1 à 3 fois, en particulier environ à 2 fois la longueur (P) du pas de chaîne.

21. Entraînement à chaîne rigide selon l'une quelconque des revendications 18 à 20,
**caractérisé en ce que** le diamètre (D) de la roue de chaîne (16) est inférieur à 4 fois, de préférence inférieur à 3 fois le pas (P) de la chaîne d'entraînement rigide (1).
